# EUROPEAN PATENT APPLICATION

(11) **EP 4 738 153 A1**
(43) Date of publication of application: **06.05.2026**
(21) Application number: 25190184.9
(22) Date of filing: 17.07.2025
(51) Int. Cl.: G06F 21/16, G06F 21/64, H04L 9/32

(54) **SYSTEM FOR VERIFYING ORIGINAL AND SOURCE OF SECURITY IMAGE**

(30) Priority: 31.10.2024 KR 20240152080
(71) Applicant: Idis Co., Ltd., Daejeon 34012 (KR)
(72) Inventor: Lee, Sang Hoon, 05698 Seoul (KR); Lim, In Taek, 10583 Goyang-si, Gyeonggi-do (KR); Park, Jin Hui, 04502 Seoul (KR)
(74) Representative: Grünecker Patent- und Rechtsanwälte PartG mbB

(57) **Abstract**

The proposed invention relates to a technology for a system including a camera device that reliably manages an original of image data at an initial generation time point at which the image data is generated by the camera device, wherein the camera device includes a first authentication block information generation commands set, and the first authentication block information generation commands set generates first authentication block information including first authentication information, which is obtained by encrypting a first hashing code generated by hashing at least a portion of security image data requested from a client terminal connected through a network with a private key of the camera device, and unique identification information of the camera device.

## Description

### CROSS-REFERENCE TO RELATED APPLICATION

This application claims priority to and the benefit of Korean Patent Application No. 10-2024-0152080, filed on October 31, 2024, the disclosure of which is incorporated herein by reference in its entirety.

### BACKGROUND

### 1. Field of the Invention

The proposed invention relates to a security image verification technology having a function of verifying whether an image is forged or tampered and a source thereof.

### 2. Discussion of Related Art

As artificial intelligence and deep learning technologies develop, technologies for generation, edition, or synthesis of images or voices are also developing significantly. For example, activities of generating photographs or images obtained by elaborately manipulating existing photos or images using an artificial intelligence learning technology called a generative adversarial network (GAN) is becoming popular among individuals or companies. Accordingly, efforts are emerging to legally punish harmful deepfake acts to reduce damage to individuals and institutions caused by misinformation or hate speech. Generally, a deepfake is a portmanteau of deep learning and fake and refers to human image synthesis technology based on artificial intelligence.

In Korean Patent (Registration No. 10-1628720, "Copied image evidence management system for verifying authenticity and integrity"), a copied image evidence management system that can confirm that a copied image has been altered from an original image even when an image storage device generates the original image and adds a hash value thereof to the generated original image to copy the original image using an image collection device is disclosed. However, in the case of a security image, an original at a time point image or voice data is generated by a camera device is important, and thus it is necessary to manage an original of the image or voice data at an initial generation time point.

Meanwhile, in the broadcasting field, there is a technology to encrypt information of an original author or editor into his or her work for copyright management. However, in the field of image security, a location of a camera device that has generated an original image and a time of photographing are more important factors than the copyright management, and thus identification of a device including the camera device and generation of information on a generation time point are required.

### SUMMARY OF THE INVENTION

The proposed invention is directed to providing a system technology with a camera device that reliably manages an original image at an initial generation time point when an image is generated by the camera device.

The proposed invention is also directed to providing a system technology for verifying an original and source of a reliable security image.

According to an aspect of the proposed invention, there is provided a system including a camera device, wherein the camera device includes a first authentication block information generation commands set, and the first authentication block information generation commands set generates first authentication block information including first authentication information, which is obtained by encrypting a first hashing code generated by hashing at least a portion of security image data requested from a client terminal connected through a network with a private key of the camera device, and unique identification information of the camera device.

According to one embodiment, the system may include an original and source verification service server, wherein the original and source verification service server may receive the first authentication information included in the image clip and the unique identification information of the camera device in response to a request for security image verification of the client terminal, and decrypt the first authentication information with a public key to verify an original and source of the image clip.

According to another embodiment, the system may provide the public key of the client terminal to a client so that the client may decrypt the first authentication information to verify the original and source of the image clip.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 illustrates a configuration of a camera system for verifying an original and source of a security image according to one embodiment;
FIG. 2 illustrates a configuration of a camera device according to one embodiment;
FIG. 3 illustrates a configuration of an image recording device according to one embodiment;
FIG. 4 illustrates a configuration of an original and source verification server according to one embodiment;
FIG. 5 illustrates a structure of an image clip generated by a camera device according to one embodiment;
FIG. 6 illustrates a flowchart of verification of an original and source of an image clip; and
FIG. 7 illustrates a method of verifying an original and source of an image clip.

### DETAILED DESCRIPTION OF EXEMPLARY EMBODIMENTS

The above-described and additional aspects are embodied through embodiments described with reference to the accompanying drawings. It is understood that components of each embodiment are possible in various combinations within one embodiment or with components of another embodiment unless otherwise stated or inconsistent with each other. Based on the principle that the inventor can adequately define the concept of terms in order to describe his or her invention in the best possible way, terms used in this specification and claims should be interpreted as meanings and concepts consistent with the description or proposed technical idea. Hereinafter, exemplary embodiments of the present invention will be described in detail with reference to the accompanying drawings.

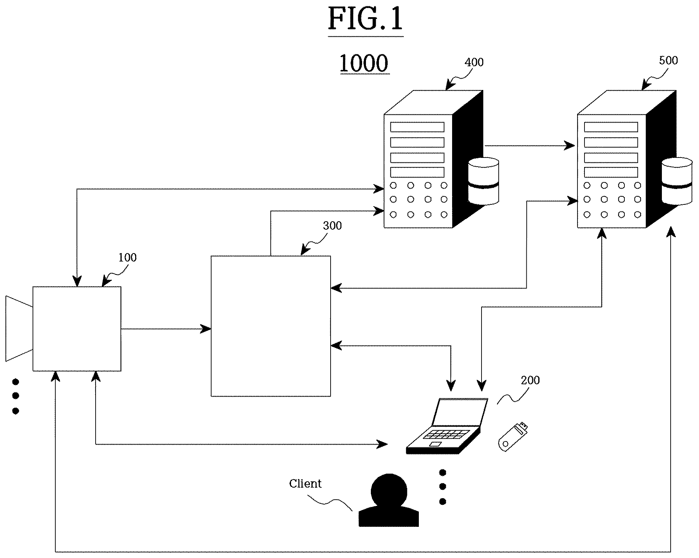

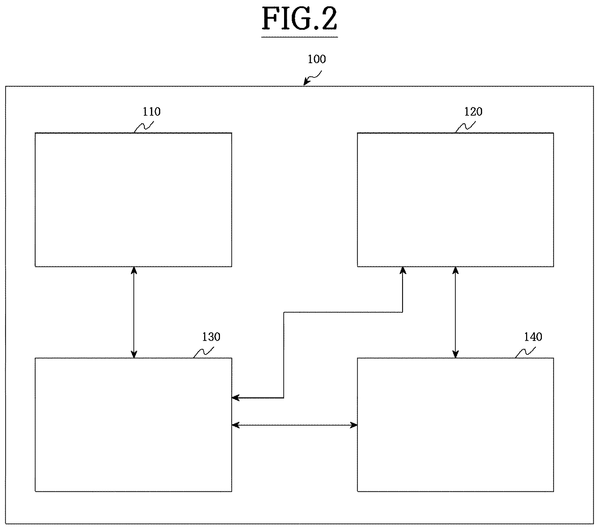

FIG. 1 illustrates a configuration of a camera system for verifying an original and source of a security image according to one embodiment. FIG. 2 illustrates a configuration of a camera device according to one embodiment. As illustrated in FIG. 1, a camera system 1000 for verifying an original and source of a security image according to one embodiment includes one or more camera devices 100. The camera device 100 may be an Internet Protocol (IP) camera device, but the present invention is not limited thereto.

The camera device 100 includes an image capturing element 110, a first communication element 120 connected to a client terminal 200 through a network, a first memory element 130 that stores an executable first program and security image data, and a first computing element 140 that executes the first program. The camera device 100 captures dynamic or static appearance of a subject. The network may be encrypted with transport layer security (TLS).

The first program includes a "first authentication block information generation commands set." The first authentication block information generation commands set generates first authentication block information including (all) first authentication information, which is obtained by hashing at least a portion of the security image data requested from the client terminal 200 connected through the network and encrypting a first hashing code recorded in frames of the security image data with a private key of the camera device 100, and unique identification information of the camera device 100.

Hashing is a known technique for detecting tampering with data. For example, in a series of image frames, the first authentication information may be included in a frame header for each frame.

According to the proposed invention, at least a portion of the image data may be hashed. According to one embodiment, the first authentication information may be included not in all frames (I-Frame, B-Frame, and P-Frame), but only in some frames, for example, I-Frame. According to one embodiment, not for an entire frame, but only for a portion of the frame, for example, only for first 10 columns, may be hashed. By reducing the amount of image data to be hashed, a time required for encryption may be reduced.

A private key is a key that is generated as a pair with a public key in an asymmetric key encryption algorithm, and such asymmetric key encryption algorithm is a known technology. The private key is distributed only to a target subject and may only be decrypted by those with the paired public key, and thus the decryption with the public key means that it was encrypted with the paired private key, and since only the target subject has the private key, it can be confirmed that the data was written by the target subject. The private key of the camera device 100 may be generated during production of the camera device 100 and installed in the camera device 100.

By assigning the private key to the camera device, encrypting the first hashing code obtained by hashing at least a portion of a security image generated by the camera device with the private key of the camera device to generate authentication information (first authentication information), and transmitting its own identification information in plain text to the client terminal together with the authentication information, a client that receives an image may obtain a public key of the camera device from the identification information, decrypt the first authentication information with the obtained public key, and compare the decrypted first authentication information with the first hashing code, thereby authenticating or checking whether an original generator of the image is the corresponding camera device.

The camera device 100 is configured with one or more camera devices 100 and identifiable unique IDs are assigned to the one or more camera devices 100. For example, the identifiable unique ID may be unique identification information of the camera device, for example, a globally unique identifier (GUID). The first authentication information may further include signature information. The unique identification information of the camera device may be composed of unencrypted plain text.

The client terminal 200 includes a desktop, laptop, or smartphone possessed by the client, and furthermore, may be configured as a Universal Serial Bus (USB) device or a hard disk. The client terminal 200 may be connected to the camera device 100 to extract security image data from the camera device 100 and store the extracted security image data. The integrity of the security image data may be authenticated through hashing, and the source of the security image data may be authenticated by encrypting the first hashing code with the private key of the camera device. The security image data may further include voice data. The camera device 100 may further include a voice recognizer (not illustrated).

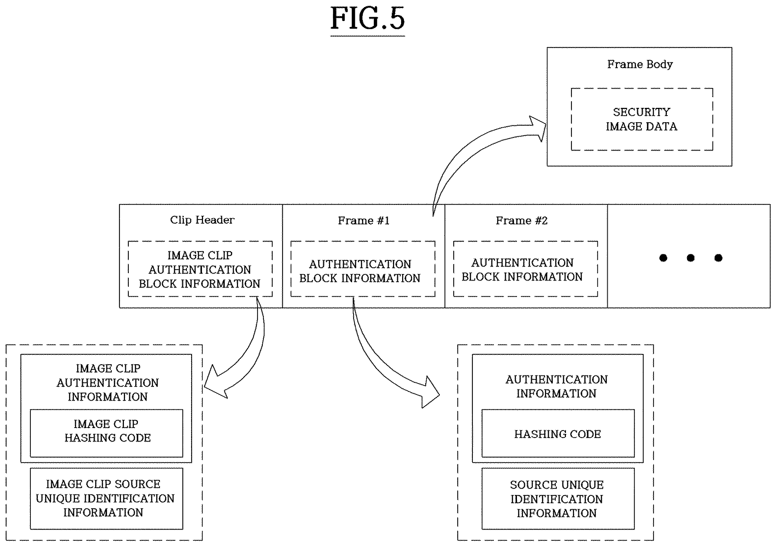

The camera device 100 may generate an image clip, or an image recording device 300 which will be described below may generate an image clip. The image clip is an image content that is edited by extracting only a specific part of the entire image. The image clip may include a clip header and a plurality of frames (unit images) (described in detail in FIG. 5).

According to one embodiment, the camera device 100 may generate a hashing code for all hashing codes of an image clip including security image data (including voice data) and store the generated hashing code in at least a portion of the image clip (e.g., a header of the image clip).

According to one embodiment, the first program may further include a "first image clip service commands set." The first image clip service commands set may extract the security image data requested from the client terminal 200 from the first memory element 130, add first image clip authentication information to the security image data including the first authentication block information generated by the first authentication block information generation commands set to generate an image clip, and transmit the image clip including the corresponding first image clip authentication information to the client terminal 200 (through the first communication element 120). The image clip is an image that is edited by extracting only a specific part of the entire image. The image clip may include a clip header and a plurality of frames (unit images) (described in detail in FIG. 5).

The first image clip authentication information may be information obtained by encrypting a hashing code that is obtained by hashing the first hashing code with the private key of the camera device. The first hashing code may be provided as a plurality of first hashing codes.

The image clip transmitted by the camera device 100 to an external device such as the client terminal 200 or the like through the first communication element 120 may be real-time streaming data.

The first computing element 140 illustrated in FIG. 2 may perform a function of executing the first authentication block information generation commands set or the first image clip service commands set, accordingly, generate the first authentication block information including the first authentication information including the first hashing code and the unique identification information of the camera device, and furthermore, generate the image clip. The first authentication information may be information obtained by encrypting the first hashing code that is generated by hashing at least a portion of the security image data with the private key of the camera device.

The client that receives the image clip and the client that requests verification of an original and source of the image clip may be the same person or different persons. Accordingly, the client terminal 200 that receives the image clip and the client terminal 200 that requests the verification of the original and source of the image clip may be the same terminal or different terminals.

According to one embodiment, in FIG. 1, the camera system 1000 for verifying the original and source of the security image may further include one or more image recording devices 300. The image recording device 300 may include a second communication element 320 connected to the client terminal 200 and the camera device 100 through a network, a second memory element 330 that stores an executable second program and the security image data, and a second computing element 340 that executes the second program. In the present invention, the image recording device 300 is not an essential component, but is a component added according to an additional aspect. The network may be encrypted with TLS.

The second program includes a "second authentication block information generation commands set."

The second authentication block information generation commands set may generate second authentication block information including (all) second authentication information, which is obtained by hashing at least a portion of the security image data requested from the client terminal 200 and encrypting a second hashing code recorded in the frames of the security image data with a private key of the image recording device 300, and unique identification information of the image recording device 300. The second authentication information may further include signature information.

The image recording device 300 may store the first authentication block information received from the camera device 100 and generate authentication block information for the image clip when the image clip requested from the client is generated.

The private key of the image recording device 300 may be assigned from an external device or server when the image recording device 300 is produced. The image recording device 300 is configured with one or more image recording devices 300 and identifiable unique IDs are assigned to the one or more image recording devices 300. The image recording device 300 may be a digital video recorder (DVR), a network video recorder (NVR), or an edge computer, and may perform functions of recording and editing images. The client terminal 200 may be connected to the image recording device 300 to extract and store the security image data. The integrity of the security image data may be authenticated through hashing, and the source of the security image data may be authenticated by encrypting the second hashing code with the private key of the image recording device 300. The private key of the image recording device 300 may be generated during production of the image recording device 300 and installed in the image recording device 300.

According to one embodiment, the second program may further include a "second image clip service commands set." The second image clip service commands set may extract the security image data requested from the client terminal 200 from the second memory element 330, add second image clip authentication information to the security image data including the second authentication block information that is generated by the first authentication information and/or the second authentication block information generation commands set to generate an image clip, and transmit the image clip including the second image clip authentication information to the client terminal 200 (through the second communication element 320). The image clip may include a clip header and a plurality of frames (unit images) (described in detail in FIG. 5).

The second image clip authentication information may be information obtained by encrypting a hashing code that is obtained by hashing the first hashing code and/or the second hashing code with the private key of the image recording device 300.

According to one embodiment, the camera device 100 may include a plurality of camera devices, and the image recording device 300 may include a plurality of image recording devices.

According to one embodiment, the camera system 1000 for verifying the original and source of the security image may further include a "key management server 400." The key management server 400 may register, integrate, and manage the unique identification information and public keys of the camera devices or the unique identification information and public keys of the image recording devices.

The key management server 400 may be configured as a cloud server or an edge box, but the present invention is not limited thereto. The key management server 400 may receive the public keys and the unique identification information separately when the camera device 100 and/or the image recording device 300 are produced.

The key management server 400 may provide the public key to the client terminal 200 that requests verification of the original and source, and the client terminal 200 may decrypt the corresponding first authentication information and/or second authentication information with the public key to verify the original and source of the security image.

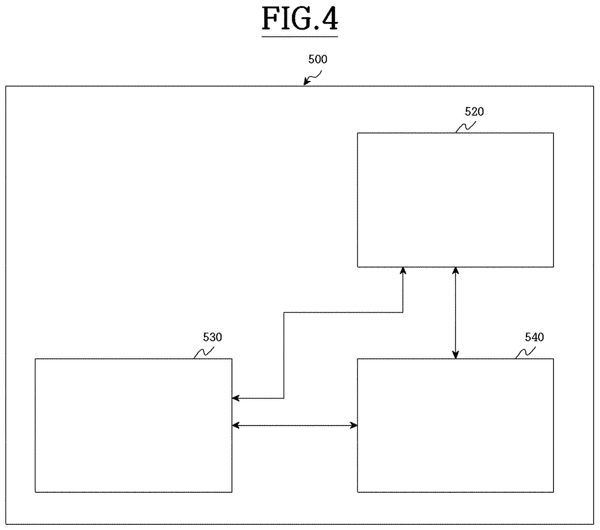

According to one embodiment, in FIG. 1, the camera system 1000 for verifying the original and source of the security image may further include an original and source verification service server 500. FIG. 4 illustrates a configuration of an original and source verification server according to one embodiment. As illustrated in FIG. 4, the original and source verification service server 500 may include a third communication element 520 connected to the client terminal and the key management server through the network, a third memory element 530 that stores an executable third program and the security image data, and a third computing element 540 that executes the third program. The network may be encrypted with TLS.

According to one embodiment, the third program may verify the original and source of the image clip generated by the "camera device 100." The third program may receive the public key of the camera device 100 corresponding to the unique identification information of the camera device 100 from the key management server 400 and receive the first authentication information from the client terminal 200 in response to a request for security image verification of the client terminal 200, decrypt the first authentication information with the public key of the camera device 100, and compare the decrypted first authentication information with the first hashing code to verify the original and source of the image clip or provide the public key of the camera device 100 to the client terminal 200 to enable the client to verify the original and source of the image clip.

According to another embodiment, the third program may verify the original and source of the image clip generated by the "image recording device 300." The third program may receive the first authentication information and/or second authentication information included in the image clip and the unique identification information of the camera device 100 and/or image recording device 300 from the key management server 400 in response to the request for security image verification of the client terminal 200, decrypt the first authentication information and/or the second authentication information with the public keys of the camera device 100 and/or the image recording device 300, and compares the decrypted first authentication information and/or the second authentication information with the first hashing code and/or the second hashing code to verify the original and source of the image clip or provide the public keys of the camera device 100 and/or the image recording device 300 to the client terminal 200 to enable the client to verify the original and source of the image clip.

According to one embodiment, the client that receives the image may obtain the public key of the image recording device 300 from the original and source verification service server 500 using the unique identification information of the image recording device 300 and decrypt the second authentication information to verify the original and source of the image clip.

The client that receives the image clip and the client that requests verification of the original and source of the image clip may be the same person or different persons. Accordingly, the client terminal 200 that receives the image clip and the client terminal 200 that requests verification of the original and source of the image clip may be the same terminal or different terminals.

According to one embodiment, the key management server 400 may be integrated with the original and source verification service server 500. The original and source verification service server 500 may perform the function of the key management server 400.

According to one embodiment, the image clip may include a plurality of frames including a frame header and a frame body, and the first authentication information and the unique identification information of the camera device may be included in the frame header.

FIG. 5 illustrates a structure of an image clip generated by a camera device or an image recording device according to one embodiment. An image clip generated by the camera device 100 may be composed of a packet including a clip header and a plurality of frames Frame #1, Frame #2, Frame #3, .... The frames may mean unit images constituting the image clip. The frame is composed of a frame header and a frame body. The frame header may include information on the frame, and the frame body may include content, that is, security image data.

According to one embodiment, the frame header of each frame Frame #1, Frame #2, Frame #3, ... may include first authentication information and unique identification information (camera ID) of the camera device. The first authentication information may be information obtained by encrypting the first hashing code with the private key of the camera device. As illustrated, the frame header of the first frame Frame #1 may include the first authentication information and unique identification information (camera ID) of the camera device. Similarly, the frame header of the second frame Frame #2 may include the first authentication information and unique identification information (camera ID) of the camera device.

In FIG. 5, the structure of the image clip generated by the camera device or the image recording device according to one embodiment is described. According to one embodiment, image clip authentication block information may be stored in a header (clip header) of the image clip. The image clip the authentication block information may further include image clip source unique identification information. The image clip authentication block information may include an image clip hashing code, the image clip source unique identification information, and image clip authentication information (see FIG. 5). The image clip hashing code may be a hashing code of hashing code(s) included in all image frames (including voice).

The structure of the image clip generated by the camera device 100 may further include authentication information (first authentication information) and unique identification information (source unique identification information) of the camera device 100 in each frame header.

The structure of the image clip generated by the image recording device 300 may further include authentication information (second authentication information) and unique identification information (source unique identification information) of the image recording device 300 in each frame header.

The image clip with such a structure may be transmitted to the client terminal 200 and/or the original and source verification service server 500.

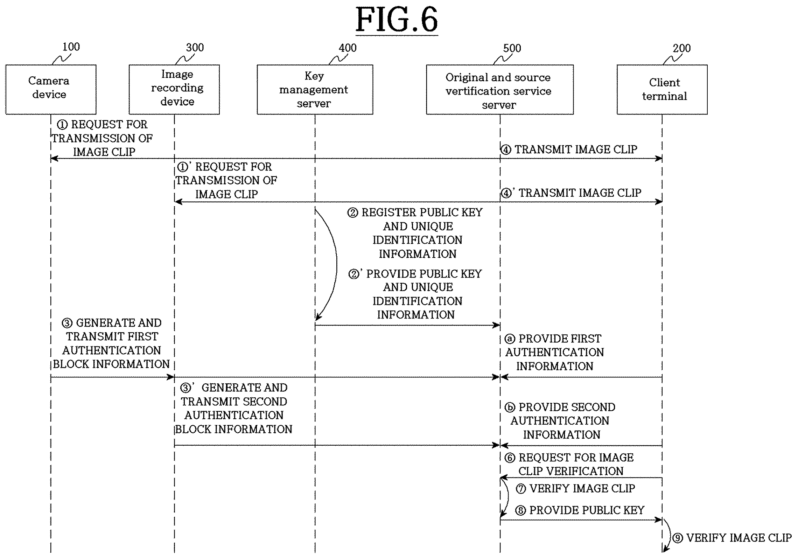

FIG. 6 illustrates a flowchart of verification of an original and source of an image clip. As illustrated, a client terminal 200 may provide a request for transmission of an image clip to a camera device 100 or an image recording device 300 (① and ①'). A key management server 400 may register public keys and unique identification information (②). The key management server 400 may transmit the public key and unique identification information of the camera device 100 or image recording device 300 to an original and source verification service server 500 (②').

The camera device 100 may generate first authentication block information including first authentication information, which is obtained by encrypting a first hashing code generated by hashing at least a portion of security image data with a private key of the camera device, and the unique identification information of the camera device 100, and transmit the generated first authentication block information to the image recording device 300 and/or the original and source verification service server 500 (③). Furthermore, the image recording device 300 may transmit an image clip including second authentication information, which is obtained by encrypting a second hashing code generated by hashing at least a portion of the security image data with a private key of the image recording device, and the unique identification information of the image recording device, to the client terminal 200 (④).

Further, the image recording device 300 may generate second authentication block information including the second authentication information and the unique identification information of the image recording device, and transmit the generated second authentication block information to the original and source verification service server 500 (③'). Furthermore, the image recording device 300 may transmit the image clip including the second authentication block information including the second authentication information and the unique identification information of the image recording device to the client terminal 200 (④').

The client terminal 200 may provide a request for image clip verification to the original and source verification service server 500 (⑥). The original and source verification service server 500 may perform image clip verification (⑦) in response to the request for the image clip verification (⑥) and provide feedback of a result of the verification to the client terminal 200.

The original and source verification service server 500 may receive the first authentication information (ⓐ) or the second authentication information (ⓑ) from the client terminal 200 that requests the verification. The second authentication information may include the first authentication information.

According to another embodiment, the original and source verification service server 500 may provide the public key corresponding to the unique identification information (⑧) to the client terminal 200 in response to the request for the image clip verification (⑥) and allow the client to perform the image clip verification (by itself) (⑨) through the client terminal 200.

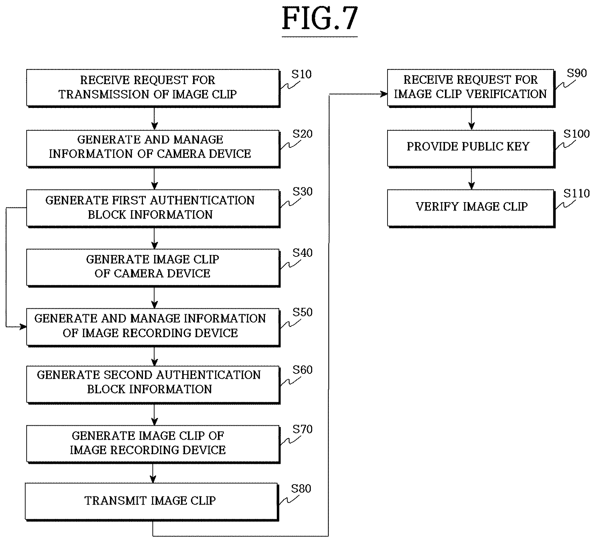

FIG. 7 illustrates a method of verifying an original and source of an image clip.

As illustrated in FIG. 7, a method S1000 of verifying an original and source of a security image according to one embodiment includes an image clip transmission request receiving operation S10 of receiving a request for transmission of an image clip including security image data from a client terminal through a network, a camera device information generation and management operation S20 of generating, integrating, and managing private keys, unique identification information, and public keys of camera devices, and a first authentication block information generation operation S30 of generating first authentication block information including first authentication information, which is obtained by hashing at least a portion of the security image data requested from the client terminal connected through the network and encrypting a first hashing code recorded in frames of the security image data with the private key of the camera device, and unique identification information of the camera device.

According to one embodiment, the method S1000 further includes a camera device image clip generation operation S40 of adding first image clip authentication information to the security image data including the first authentication block information and generating the image clip. The image clip may include a clip header and a plurality of frames (unit images) (described in detail in FIG. 5). The first image clip authentication information may be information obtained by encrypting a hashing code that is obtained by hashing the first hashing code with the private key of the camera device. The first hashing code may be provided as a plurality of first hashing codes. The first hashing code may include voice-related hashing codes as well as image-related hashing codes.

In the camera device information generation and management operation S20, the private key, unique identification information, and public key of the camera device may be generated in the manufacturing stage of the camera device.

According to the proposed invention, at least a portion of the image data may be hashed. According to one embodiment, the first authentication information may be included not in all frames (I-Frame, B-Frame, and P-Frame), but only in some frames, for example, I-Frame. According to one embodiment, not for an entire frame, but only for a portion of the frame, for example, only for first 10 columns, may be hashed. By reducing the amount of image data to be hashed, a time required for encryption may be reduced.

A private key is a key that is generated as a pair with a public key in an asymmetric key encryption algorithm, and such asymmetric key encryption algorithm is a known technology. The private key is distributed only to a target subject and may only be decrypted by those with the paired public key, and thus the decryption with the public key means that it was encrypted with the paired private key, and since only the target subject has the private key, it can be confirmed that the document was written by the target subject.

By assigning the private key to the camera device, encrypting the first hashing code obtained by hashing at least a portion of the security image generated by the camera device with the private key to generate authentication information (first authentication information), and transmitting its own identification information in plain text to the client terminal together with the authentication information, a client that receives an image may obtain a public key of the camera device from the identification information, decrypt (or decode) the first authentication information with the obtained public key, and compare the decrypted first authentication information with the first hashing code, thereby authenticating or checking whether an original generator of the image is the corresponding camera device.

The private key of the camera device is injected from the outside during the production of products and stored in an external device or server, and may also be received from the external device or server (encryption server). The camera device is configured with one or more camera devices and identifiable unique IDs are assigned to the one or more camera devices. For example, the identifiable unique ID may be unique identification information of the camera device, for example, a GUID. The first authentication information may further include signature information. The unique identification information of the camera device may be composed of unencrypted plain text.

As illustrated in FIG. 7, the method S1000 of verifying the original and source of the security image according to one embodiment may further include an image recording device information generation and management operation S50 of generating, integrating, and managing private keys, unique identification information, and public keys of image recording devices. The registration, integration, and management of the unique identification information and the public keys of the image recording devices may be performed by a server. The server may be configured as a cloud server or an edge box, but the present invention is not limited thereto. In the image recording device information generation and management operation S50, the private key, unique identification information, and public key of the image recording device information may be generated in the manufacturing stage of the image recording device information.

As illustrated in FIG. 7, the method S1000 of verifying the original and source of the security image according to one embodiment may further include a second authentication block information generation operation S60 of generating second authentication block information including second authentication information, which is obtained by hashing at least a portion of the security image data and encrypting a second hashing code recorded in the frames of the security image data with a private key of the image recording device, and unique identification information of the image recording device.

The image recording device is configured with one or more image recording devices and identifiable unique IDs are assigned to the one or more image recording devices. The image recording device may be a DVR, a NVR, or an edge computer, and may perform functions of recording and editing images. The client terminal may be connected to the image recording device to extract and store the security image data. The image recording device may be electrically connected to the camera device.

As illustrated in FIG. 7, the method S1000 of verifying the original and source of the security image according to one embodiment may further include an image recording device image clip generation operation S70 of adding second image clip authentication information to the security image data including the first authentication block information and/or second authentication block information and generating the image clip, and an image clip transmission operation S80 of transmitting the image clip to the client terminal. The image clip authentication information may be information obtained by encrypting a hashing code that is obtained by hashing the first hashing code and/or the second hashing code with the private key of the image recording device. The first hashing code and/or the second hashing code may be provided as a plurality of first hashing codes and/or the second hashing codes. The first hashing code and the second hashing code may include voice-related hashing codes as well as image-related hashing codes.

As illustrated in FIG. 7, the method S1000 of verifying the original and source of the security image according to one embodiment may further include an image clip verification request receiving operation S90 of receiving a request for image clip verification from the client terminal through the network, a public key provision operation S100 of providing the public key to the client terminal or the original and source verification service server, and an image clip verification operation S110 of decrypting, by the client terminal or the original and source verification service serve, first image clip authentication information or second image clip authentication information with the public key and comparing the decrypted first image clip authentication information or second image clip authentication information with a first image clip hashing code or a second image clip hashing code to verify the source of the image clip, or decrypting the first authentication information or the second authentication information and comparing the decrypted first authentication information or second authentication information with the first hashing code or the second hashing code to verify the original of the image clip.

The client that receives the image clip and the client that requests verification of the original and source of the image clip may be the same person or different persons. Accordingly, the client terminal that receives the image clip and the client terminal that requests verification of the original and source of the image clip may be the same terminal or different terminals.

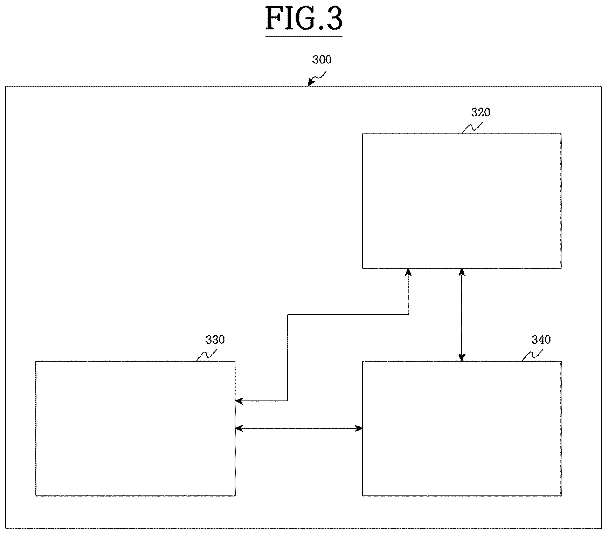

The above descriptions of FIGS. 1 to 6 may be combined by reference to FIG. 7. The operations illustrated in FIG. 7 are not limited in the illustrated order.

According to the proposed invention, the original can be reliably managed at the initial generation time point at which image or voice data is generated by a camera device, and thus whether the security image has been tampered can be checked or its source can be verified. Furthermore, in a content generation device such as a recording device that edits an image generated by a camera to generate an image clip, the device can be authenticated and a subject who generates image clip can be identified to prevent tampering, and even in the edited image clip, the camera that originally generated the content can be identified or whether there has been tampering at the generation time point can be checked.

Ultimately, illegal deepfake activities by individuals or groups can be prevented.

Effects of the present invention are not limited to the above-described effects and other effects that are not described may be clearly understood by those skilled in the art from this specification and the accompanying drawings.

While embodiments of the present invention have been described with reference to the accompanying drawing, the present invention is not limited to the exemplary embodiments. It should be interpreted that various modifications that can be apparently made by those skilled in the art are included in the scope of the present invention. The appended claims are intended to cover such modifications.

## Claims

1. A camera system for verifying an original and source of a security image, comprising one or more camera devices,
wherein the camera device includes an image capturing element, a first communication element connected to a client terminal through a network, a first memory element that stores an executable first program and security image data, and a first computing element that executes the first program, and
the first program includes a first authentication block information generation commands set that generates first authentication block information including first authentication information, which is obtained by hashing at least a portion of the security image data requested from the client terminal connected through the network and encrypting a first hashing code recorded in frames of the security image data with a private key of the camera device, and unique identification information of the camera device.

2. The camera system of claim 1, wherein the first program further includes a first image clip service commands set that extracts the security image data requested from the client terminal from the first memory element, adds first image clip authentication information to the security image data including the first authentication block information generated by the first authentication block information generation commands set to generate an image clip, and transmits the image clip including the first image clip authentication information to the client terminal, and
the first image clip authentication information is information obtained by encrypting a hashing code that is obtained by hashing the first hashing code with the private key of the camera device.

3. The camera system of claim 1, further comprising one or more image recording devices,
wherein the image recording device further includes a second communication element connected to the client terminal and the camera device through the network, a second memory element that stores an executable second program and the security image data, and a second computing element that executes the second program, and
the second program includes a second authentication block information generation commands set that generates second authentication block information including second authentication information, which is obtained by hashing at least a portion of the security image data requested from the client terminal and encrypting a second hashing code recorded in the frames of the security image data with a private key of the image recording device, and unique identification information of the image recording device.

4. The camera system of claim 3, wherein the second program further includes a second image clip service commands set that extracts the security image data requested from the client terminal from the second memory element, adds second image clip authentication information to the security image data including the second authentication block information generated by the second authentication block information generation commands set to generate an image clip, and transmits the image clip including the second image clip authentication information to the client terminal, and
the second image clip authentication information is information obtained by encrypting a hashing code that is obtained by hashing the first hashing code or the second hashing code with the private key of the image recording device.

5. The camera system of claim 3, further comprising a key management server configured to register, integrate, and manage the unique identification information and public keys of the camera devices or the unique identification information and public keys of the image recording devices.

6. The camera system of claim 5, further comprising an original and source verification service server including a third communication element connected to the client terminal, the key management server, and the camera devices through the network, a third memory element that stores an executable third program, and a third computing element that executes the third program,
wherein the third program receives the public key corresponding to the unique identification information of the camera device included in the image clip from the key management server in response to a request for security image verification of the client terminal, decrypts the first authentication information with the public key of the camera device, and compares the decrypted first authentication information with the first hashing code to verify the original and source of the image clip or provides the public key of the camera device to the client terminal to enable a client to verify the original and source of the image clip.

7. The camera system of claim 5, further comprising an original and source verification service server including a third communication element connected to the client terminal, the key management server, and the image recording device through the network, a third memory element that stores an executable third program, and a third computing element that executes the third program,
wherein the third program receives the public key corresponding to the unique identification information of the image recording device included in the image clip from the key management server in response to the request for security image verification of the client terminal, decrypts the second authentication information with the public key of the image recording device, and compares the decrypted second authentication information with the second hashing code to verify the original and source of the image clip or provides the public keys of the camera device and the image recording device to the client terminal to enable the client to verify the original and source of the image clip.

8. The camera system of claim 1, wherein the image clip includes a plurality of frames including a frame header and a frame body, and
the first authentication information and the unique identification information of the camera device are included in the frame header.

9. The camera system of claim 8, wherein image clip authentication block information is stored in the header of the image clip, and the image clip authentication block information further includes image clip source unique identification information.

10. A method (S100) of verifying an original and source of a security image, comprising:
an image clip transmission request receiving operation (S10) of receiving a request for transmission of an image clip including security image data from a client terminal through a network;
a camera device information generation and management operation (S20) of generating, integrating, and managing private keys, unique identification information, and public keys of camera devices; and
a first authentication block information generation operation (S30) of generating first authentication block information including first authentication information, which is obtained by hashing at least a portion of the security image data requested from the client terminal connected through the network and encrypting a first hashing code recorded in frames of the security image data with the private key of the camera device, and unique identification information of the camera device.

11. The method (S1000) of claim 10, further comprising a camera device image clip generation operation (S40) of adding first image clip authentication information to the security image data including the first authentication block information and generating the image clip,
wherein the first image clip authentication information is information obtained by encrypting a hashing code that is obtained by hashing the first hashing code with the private key of the camera device.

12. The method (S1000) of claim 10, further comprising an image recording device information generation and management operation (S50) of generating, integrating, and managing private keys, unique identification information, and public keys of image recording devices.

13. The method (S1000) of claim 10, further comprising a second authentication block information generation operation (S60) of generating second authentication block information including second authentication information, which is obtained by hashing at least a portion of the security image data and encrypting a second hashing code recorded in the frames of the security image data with a private key of the image recording device, and unique identification information of the image recording device.

14. The method (S1000) of claim 13, further comprising:
an image recording device image clip generation operation (S70) of adding second image clip authentication information to the security image data including the first authentication block information or second authentication block information and generating the image clip; and
an image clip transmission operation (S80) of transmitting the image clip to the client terminal,
wherein the second image clip authentication information is information obtained by encrypting a hashing code that is obtained by hashing the first hashing code or the second hashing code with the private key of the image recording device.

15. The method (S1000) of claim 14, further comprising:
an image clip verification request receiving operation (S90) of receiving a request for image clip verification from the client terminal through the network;
a public key provision operation (S100) of providing the public key to the client terminal or the original and source verification service server; and
an image clip verification operation (S110) of decrypting, by the client terminal or the original and source verification service serve, first image clip authentication information or second image clip authentication information with the public key and comparing the decrypted first image clip authentication information or second image clip authentication information with a first image clip hashing code or a second image clip hashing code to verify the source of the image clip, or decrypting the first authentication information or the second authentication information and comparing the decrypted first authentication information or second authentication information with the first hashing code or the second hashing code to verify the original of the image clip.
